# EUROPEAN PATENT SPECIFICATION

(11) **EP 1 967 766 B1**
(45) Date of publication and mention of the grant of the patent: **19.05.2010**
(21) Application number: 08004300.3
(22) Date of filing: 07.03.2008
(51) Int. Cl.: F16H 55/48, F16C 13/00

(54) **Component comprising a ring-shaped metal member and a ring-shaped resin portion and manufacturing method thereof**
Komponente bestehend aus einem ringförmigen Metall- und Harzteil und Verfahren zu deren Herstellung
Composant comprenant un élément metallique de forme annulaire et une partie en résine de forme annulaire et sa méthode de fabrication

(30) Priority: 07.03.2007 JP 2007056791
(43) Date of publication of application: 10.09.2008
(73) Proprietor: JTEKT Corporation, Osaka-shi Osaka 542-8502 (JP)
(72) Inventor: Yanai, Kunio, Osaka-shi Osaka 542-8502 (JP); Hamada, Kazuki, Osaka-shi Osaka 542-8502 (JP)
(74) Representative: Görz, Ingo

(56) References cited:
- JP-A- 2003 056 677
- JP-A- 2004 162 858
- JP-A- 2004 286 179
- JP-A- 2005 220 957
- US-A- 2 845 696
- US-A- 3 990 136

## Description

### BACKGROUND OF THE INVENTION

### 1. Field of the Invention

The present invention relates to a resin wound component, and more particularly, to a resin wound component in which a ring-shaped resin portion is integrally formed with an outer circumference of a ring-shaped metal member.

### 2. Related Art

In the past, for example, as a pulley of an ancillary drive belt of an automobile engine, a resin wound component has been used in which a metal member such as a rolling bearing or a metal hub is integrally formed with an inner circumference of a ring-shaped resin portion (pulley) having a belt guide surface formed in an outer circumference thereof.

Such a resin wound component is manufactured by an insert molding for simultaneously incorporating the metal member into the resin portion formed by an injection molding. However, since a linear expansion coefficient of a material of the resin portion is different from that of a material of the metal member, an adhesion degree between the resin portion and the metal member reduces due to a thermal expansion difference caused by a temperature rise or a temperature drop, and thus a problem arises in that a relative slip (creep or rotation motion) between the resin portion and the metal member occurs.

For this reason, in order to prevent such a creep, various techniques have been proposed. For example, JP-A-2001-317616 discloses a bearing in which a concave groove is formed in an outer circumferential surface of an outer ring of a rolling bearing as a metal member so that the depth and width gradually change in a circumferential direction, and a resin pulley is formed so that a resin portion (pulley) has a convex portion fitted into the concave groove. In the bearing attached with the resin pulley, the center of the concave groove is configured to be eccentric relative to the center of the outer circumferential surface of the outer ring. In the bearing attached with the resin pulley disclosed in JP-A-2001-317616, the convex portion of the resin portion (pulley) is engaged into the concave groove of the outer ring in both the depth direction and the width direction of the concave groove along the circumferential direction, and thus a wedge effect occurs between the convex portion and the concave groove. As a result, it is possible to prevent a relative motion between the resin portion (pulley) and the outer ring.

Additionally, JP-A-2004-162858 discloses a bearing in which a pin is provided in an upright manner in an outer circumferential surface of an outer ring, and a resin pulley is formed so that a resin portion (pulley) covers the pin. In the bearing attached with the resin pulley, the pin is provided in the outer circumferential surface of the outer ring so as to directly resist a slide in the circumferential direction, and the resin pulley is formed so as to cover the pin. As a result, it is possible to allow the pin to resist the rotation motion.

In the bearing disclosed in JP-A-2001-317616 and JP-A-2004-162858, it is possible to prevent a creep between the resin portion and the outer ring at a normal rotation. However, for example, in the case where an excessive load or an abnormal temperature rise occurs, it is not possible to sufficiently prevent a creep therebetween. As a result, a problem arises in that the belt is not securely guided.

That is, in the bearings described above, the resin portion and the outer ring are configured to rotate together. Accordingly, when excessive torque load occurs due to a lock of the bearing, the belt slips, and thus a problem arises in that the belt is not securely guided any more.

In the bearing disclosed in JP-A-2004-162858, a peeling occurs inside the bearing. Accordingly, the bearing vibrates due to the inside peeling to thereby increase the temperature thereof, and thus when an abnormal heat occurs, a problem arises in that the belt is not securely guided.

JP 2005 220957 A, JP 2004 286179 A and US-A-3 990 136 foresee to have no separate stopper member which is, in turn, not manufactured from a different material.

JP 2003 056677 A merely teaches a wedge or adhesive for the fixing member. Accordingly, there is no discussion about the material used for manufacturing the fixing member.

JP 2004 162858 A discloses a stopper which is provided in an outer circumferential surface of a ring-shaped metal member so as to prevent a relative rotation between the metal member and a ring-shaped resin portion. The stopper is formed of a metal.

US-A-2 845 696 discloses a connection between pinions and shafts without discussing the respective material in detail.

### SUMMARY OF THE INVENTION

The present invention is contrived in consideration of the above-described problem, and an object of the invention is to provide a resin wound component that is designed to prevent a creep between a resin portion and a metal member at a normal rotation and to allow a rotation motion between the resin portion and the metal member at the time an abnormal heat occurs due to a lock of the metal member.

According to the invention, the object is solved by the features of the main claim. The sub-claims contain further preferred developments of the invention.

According to an aspect of the invention, there is provided a resin wound component including: a ring-shaped metal member; and a ring-shaped resin portion which is integrally formed with an outer circumference of the ring-shaped metal member, wherein a stopper formed of thermoplastic resin is provided in an outer circumferential surface of the metal member so as to prevent a relative rotation between the metal member and the resin portion and a part of the stopper is disposed in a hole formed in the outer circumferential surface of the outer ring and another part of the stopper is embedded in an inner circumferential cylindrical portion of the resin portion.

In the resin wound component according to the invention, it is possible to prevent a creep between the resin portion and the metal member at a normal rotation by use of the stopper disposed in the outer circumferential surface of the metal member. At the time excessive torque occurs due to a lock of the metal member, the stopper is disconnected. Additionally, at the time an abnormal heat of the metal member occurs, the stopper formed of thermoplastic resin melts, and thus a rotation motion between the resin portion and the metal member is allowed. Accordingly, it is possible to securely guide the belt by preventing breakage or separation of the belt due to a slip of a belt wound on the outer circumferential surface of the resin portion.

According to the resin wound component related to the invention, it is possible to prevent a creep between the resin portion and the metal member at a normal rotation and to allow a rotation motion between the resin portion and the metal member at the time an abnormal heat occurs due to a lock of the metal member.

For the material of the stopper according to the invention, it is preferably used a thermoplastic resin such as polyamide, polyoxymethylene, polyethylene terephthalate, and polybutylene terephthalate.

Further, according to another aspect of the invention, there is provided a manufacturing method of a resin pulley device, comprising the steps of:
disposing a ring-shaped metal member, which has a hole formed on an outer circumferential surface thereof, such that a stopper formed of a thermoplastic resin is disposed into the hole in the outer circumferential surface of the metal member so as to partially protrude from the outer circumferential surface;
flowing an unsolidified resin into the mold; and
forming a ring-shaped resin pulley integrally with the metal member by solidifying the resin in the mold.

### BRIEF DESCRIPTION OF THE DRAWINGS

Fig. 1 is a partially sectional view illustrating a resin wound component according to an embodiment of the invention.
Fig. 2 is a partially sectional view illustrating the resin wound component according to another embodiment of the invention.

### DETAILED DESCRIPTION OF THE PREFERRED EMBODIMENTS

Hereinafter, a resin wound component according to exemplary embodiments of the invention will be described with reference to the accompanying drawings.

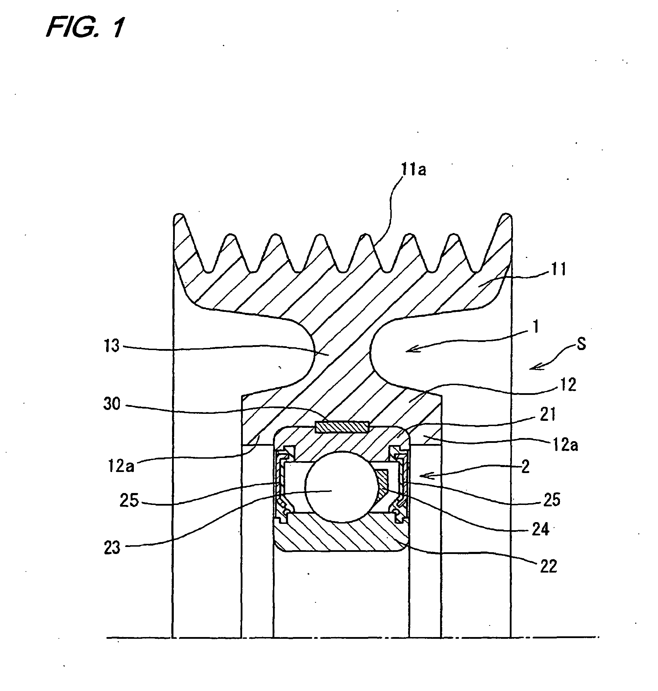

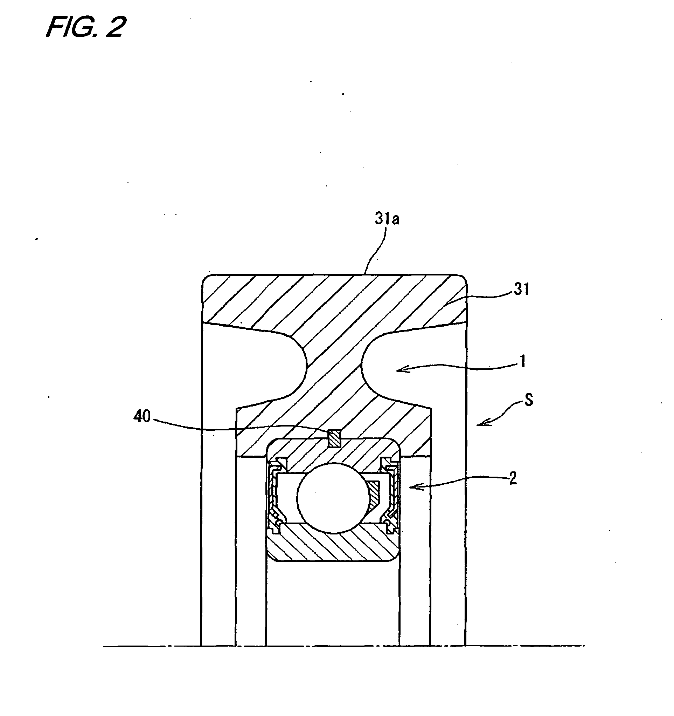

Fig. 1 is a partially sectional view illustrating a resin pulley S as a resin wound component according to an embodiment of the invention. The resin pulley S is used for example as a pulley of an ancillary drive belt of an automobile engine. The resin pulley S is configured such that a rolling bearing 2 as a metal member is inserted into the inner circumference of a ring-shaped resin portion 1. At this time, an outer circumferential cylindrical portion 11 having a plurality of V-shaped grooves 11a formed in the outer circumference thereof is formed in the outer circumference of the resin portion 1, and an inner circumferential cylindrical portion 12 for fixing the outer circumference of an outer ring 21 of the rolling bearing 2 is formed in the inner circumference thereof. The inner circumferential cylindrical portion 12 includes a surrounding portion 12a for surrounding outer circumferential edges of both end surfaces of the outer ring 21 of the rolling bearing 2. Additionally, a connection portion 13 is formed between the outer circumferential cylindrical portion 11 and the inner circumferential cylindrical portion 12. In Figs. 1 and 2, Reference Numeral 22 denotes an inner ring which is disposed in an inner diameter side of the outer ring 21 so as to be concentric relative to the outer ring 21, and Reference Numeral 23 denotes balls as a plurality of rolling elements which are arranged in a ring-shaped space between the outer ring 21 and the inner ring 22. The balls 23 are held by a cage 24 at a predetermined interval in the circumferential direction. Seal members 25 are disposed in left and right ends of the ring-shaped space (left and right in Fig. 1), that is, left and right ends of both rings 21 and 22.

A stopper 30 is disposed in the outer circumferential surface of the outer ring 21. The stopper 30 is formed of thermoplastic resin such as polyamide (PA), polyoxymethylene (POM), polyethylene terephthalate (PET), and polybutylene terephthalate (PBT). At this time, the stopper 30 can be disposed in the outer circumferential surface of the outer ring 21 in the manner that a melt resin (unsolidified resin) forming the resin portion 1 is allowed to flow into a mold while a part thereof is disposed in a protruding manner from the outer circumferential surface of the outer ring 21, in a hole formed in the outer circumferential surface of the outer ring 21.

The stopper 30 has a function for preventing a creep of the outer ring 21 and the resin portion 1 in the manner that a part thereof is disposed in the hole formed in the outer circumferential surface of the outer ring 21 and the rest thereof is embedded in the inner circumferential cylindrical portion 12 of the resin portion 1.

The stopper 30 can be disposed at one or two positions of the outer circumferential surface of the outer ring 21. Additionally, the shape and size of the stopper 30 are selected so that the outer ring 21 and the resin portion 1 rotate together with each other at a normal rotation and are disconnected from each other at the time excessive torque exceeding a predetermined value occurs due to breakage of the rolling bearing 2. Specifically, as shown in Fig. 1, the cylindrical or prismatic stopper 30 may be disposed in the outer circumferential surface of the outer ring 21 along the axial direction of the rolling bearing 2. Alternatively, as shown in Fig. 2, a short cylindrical or short prismatic stopper 40 may be disposed in an upright manner in the outer circumferential surface of the outer ring 21. The resin pulley S shown in Fig. 2 is a resin pulley of a flat pulley type, and a flat belt guide surface 31a is formed in the outer circumference of the outer circumferential cylindrical portion 31.

At a normal rotation, the resin portion 1 and the outer ring 21 of the rolling bearing 2 engage with each other through the stopper 30, and thus it is possible to prevent a creep between the resin portion 1 and the outer ring 21. Additionally, at the time large torque occurs due to breakage,of the rolling bearing 2, the stopper 30 is disconnected. At the time the temperature of the outer circumferential surface of the outer ring 21 becomes high due to an abnormal heat of the rolling bearing 2, the stopper 30 formed of thermoplastic resin melts, and thus a rotation motion between the resin portion 1 and the outer ring 21 is allowed. Accordingly, it is possible to prevent breakage or separation of a belt due to a slip of the belt wound on the outer circumference of the outer circumferential cylindrical portion 11 of the resin portion 1. As a result, even when breakage or abnormal heat of the bearing portion of the resin wound component occurs, it is possible to prevent a vehicle from being immediately stopped, thereby enabling a driver to drive to a service center in a short distance just after the driver has found out the vehicle trouble.

## Claims

1. A resin wound component comprising:
- a ring-shaped metal member (21); and
- a ring-shaped resin portion (1) which is integrally formed with an outer circumference of the ring-shaped metal member (21), wherein a stopper (30, 40) is provided in an outer circumferential surface of the metal member (21) so as to prevent a relative rotation between the metal member (21) and the resin portion (1) and a part of the stopper (30, 40) is disposed in a hole formed in the outer circumferential surface of the outer ring (21) and another part of the stopper (30, 40) is embedded in an inner circumferential cylindrical portion of the resin portion (1), **characterized in that** the stopper (30, 40) is formed of a thermoplastic resin.

2. The resin wound component according to claim 1, wherein the thermoplastic resin includes at least any one of polyamide, polyoxymethylene, polyethylene terephthalate, and polybutylene terephthalate.

3. A manufacturing method of a resin pulley device, comprising the steps of:
- disposing a ring-shaped metal member (21), which has a hole formed on an outer circumferential surface thereof, such that a stopper (30, 40) formed of a thermoplastic resin is disposed into the hole in the outer circumferential surface of the metal member (21) so as to partially protrude from the outer circumferential surface;
- flowing an unsolidified resin into a mold; and
- forming a ring-shaped resin pulley (1) integrally with the metal member (21) by solidifying the resin in the mold.

## Patentansprüche

1. Harzumwickeltes Bauteil, umfassend:
- ein ringförmiges Metallelement (21); und
- einen ringförmigen Harzbereich (1), der einstückig mit einem Außenumfang des ringförmigen Metallelements (21) ausgebildet ist, wobei ein Anschlag (30, 40) in einer Außenumfangsfläche des Metallelements (21) vorgesehen ist, um so eine relative Drehung zwischen dem Metallelement (21) und dem Harzbereich (1) zu verhindern und wobei ein Teil des Anschlags (30, 40) in einem Loch angeordnet ist, das in der Außenumfangsfläche des Außenrings (21) ausgebildet ist, und ein anderer Teil des Anschlags (30, 40) in einem zylindrischen Innenumfangsbereich des Harzbereichs (1) integriert ist, **dadurch gekennzeichnet, dass** der Anschlag (30, 40) aus einem Thermoplastharz ausgebildet ist.

2. Harzumwickeltes Bauteil nach Anspruch 1, wobei das Thermoplastharz zumindest Polyamid, Polyoxymethylen, Polyethylen-Terephthalat und/oder Polybutylen-Terephthalat umfasst.

3. Herstellungsverfahren einer Harzriemenscheibenvorrichtung, umfassend die Schritte:
- Anordnen eines ringförmigen Metallelements (21), das ein Loch aufweist, das auf einer Außenumfangfläche davon ausgebildet ist, so dass ein Anschlag (30, 40), ausgebildet aus einem Thermoplastharz, in dem Loch in der Außenumfangsfläche des Metallelements (21) so angeordnet ist, dass er teilweise von der Außenumfangsfläche vorsteht;
- Einleiten eines nicht gehärteten Harzes in eine Gießform; und
- Ausbilden einer ringförmigen Harzriemenscheibe (1) einstückig mit dem Metallelement (21) durch Aushärten des Harzes in der Gießform.

## Revendications

1. Composant enroulé en résine comprenant :
- un élément métallique de forme annulaire (21) ; et
- une partie en résine de forme annulaire (1) qui est formée d'un seul tenant avec une circonférence externe de l'élément métallique de forme annulaire (21),
dans lequel un butoir (30, 40) est prévu dans une surface circonférentielle externe de l'élément métallique (21) de sorte à empêcher une rotation relative entre l'élément métallique (21) et la partie de résine (1), et une partie du butoir (30, 40) est disposée dans un trou formé dans la surface circonférentielle externe de l'anneau externe (21) et une autre partie du butoir (30, 40) est encastrée dans une partie cylindrique circonférentielle interne de la partie de résine (1),
**caractérisé en ce que** le butoir (30, 40) est formé à partir d'une résine thermoplastique.

2. Composant enroulé en résine selon la revendication 1, dans lequel la résine thermoplastique comprend au moins un quelconque parmi le polyamide, le polyoxyméthylène, le polyéthylène térephtalate et le polybutylène térephtalate.

3. Procédé de fabrication d'un dispositif de poulie en résine, comprenant les étapes consistant à :
- disposer un élément métallique de forme annulaire (21), qui possède un trou formé sur une surface circonférentielle externe de celui-ci, de telle sorte qu'un butoir (30, 40) réalisé à partir d'une résine thermoplastique est disposé dans le trou dans la surface circonférentielle externe de l'élément métallique (21) de sorte à faire saillie partiellement depuis la surface circonférentielle externe ;
- couler une résine non solidifiée dans un moule ; et
- former une poulie en résine de forme annulaire (1) d'un seul tenant avec l'élément métallique (21) en solidifiant la résine dans le moule.
